# EUROPÄISCHE PATENTSCHRIFT

(11) **EP 4 211 001 B1**
(45) Veröffentlichungstag und Bekanntmachung des Hinweises auf die Patenterteilung: **28.08.2024**
(21) Anmeldenummer: 21740529.9
(22) Anmeldetag: 09.07.2021
(51) Int. Cl.: B60R 1/12, B62J 6/24, B62J 6/26, B62J 25/00

(54) **RÜCKSPIEGELANORDNUNG MIT VERDREHSCHUTZ**
REAR MIRROR ASSEMBLY WITH ANTI-ROTATION PROTECTION
ENSEMBLE MIROIR ARRIÈRE AVEC PROTECTION ANTI-ROTATION

(30) Priorität: 07.09.2020 DE 102020123262
(43) Veröffentlichungstag der Anmeldung: 19.07.2023
(73) Patentinhaber: Bayerische Motoren Werke Aktiengesellschaft, 80809 München (DE)
(72) Erfinder: SCHLAYER, Andreas, 81547 München (DE)
(86) Internationale Anmeldenummer: PCT/EP2021/069128
(87) Internationale Veröffentlichungsnummer: WO 2022/048816

(56) Entgegenhaltungen:
- DE-A1- 102017 126 294
- DE-A1- 19 752 185
- IT-A1- MI20 120 585
- KR-B1- 101 788 979
- US-A- 2 600 893
- US-A1- 2017 253 184

## Beschreibung

Die Erfindung betrifft eine Rückspiegelanordnung gemäß dem Oberbegriff des Patentanspruchs 1 sowie ein entsprechend ausgestattetes Kraftrad.

Krafträder, wie Motorräder oder Motorroller, weisen in der Regel einen oder zwei Rückspiegel auf, um dem Fahrer während der Fahrt die Möglichkeit zu geben, einen Bereich hinter dem Fahrer zu überwachen. Hierbei ist ein Spiegel in einem Gehäuse gehalten, welches wiederum über einen Haltearm an der Struktur des Fahrzeugs befestigt ist. Meist ist der Spiegel starr mit dem Gehäuse verbunden, so dass eine Einstellbarkeit des Spiegels über eine gelenkige Verbindung mit dem Haltearm bereitgestellt wird.

Mit zunehmender Integration von Assistenzsystemen und Komfortfunktionen finden zunehmend auch bei Krafträdern elektrische Komponenten, wie Leuchtelemente, Blinker oder Spiegelheizungen, Einzug in das Spiegelgehäuse und werden über elektrische Leitungen angesteuert, die im Inneren des Haltearms von der Fahrzeugstruktur bis ins Spiegelgehäuse geführt werden. Üblicherweise werden die elektrischen Leitungen außerdem durch ein Inneres des Gelenks der gelenkigen Verbindung geführt.

Bei derartig "elektrifizierten" Rückspiegeln kann nicht ausgeschlossen werden, dass durch mehrfaches Verstellen des Spiegels beziehungsweise des Gehäuses über die Lebenszeit des Fahrzeugs die elektrischen Leitungen verdrillt und auf diese Weise beschädigt werden oder hierdurch eine elektrische Kontaktierung gelöst wird.

Die DE 197 52 185 A1 bezieht sich auf eine verbesserte Struktur zum Halten eines Rückspiegels eines Motorrads, nach dem Oberbegriff von Anspruch 1. Dort geht es insbesondere darum, eine Struktur zum Halten eines Rückspiegels bereitzustellen, die ermöglicht, dass der Hauptkörper des Rückspiegels glatt, sanft bzw. gleichförmig an einem den Rückspiegel haltenden Abschnitt gedreht werden kann, ohne ein "Rütteln" zu erzeugen.

Die US 2 600 893 A betrifft ein Fahrzeug mit einem Arm, an welchem der Rückspiegel drehbar und schwenkbar befestigt ist.

Die IT MI20 120 585 A1 betrifft einen einstellbaren Rückspiegel für ein Motorrad mit einem Haltearm, über welchen das Spiegelgehäuse an dem Motorrad befestigt werden kann, wobei eine Arretiervorrichtung des Spiegelgehäuses außerhalb des Spiegelgehäuses vorgesehen ist.

Die US 2017/253184 A1 betrifft einen Seitenspiegel eines Fahrzeugs, welcher weniger Windgeräusche produziert.

Die DE 10 2017 126 294 A1 betrifft einen Rückspiegel für ein Fahrzeug, der einen großen Verstellungsbereich und eine hohe Stabilität aufweist.

Die KR 101 788 979 B1 betrifft eine Befestigungseinrichtung für einen Spiegelhalter, welcher diesen sicher hält und verschleißarm arbeitet.

Eine Aufgabe der Erfindung ist es eine Rückspiegelanordnung in vorteilhafter Weise weiterzuentwickeln, insbesondere die Gefahr einer Beschädigung von in der Rückspiegelanordnung integrierten elektrischen Leitungen zu reduzieren.

Diese Aufgabe wird gelöst mit einer Rückspiegelanordnung gemäß dem Gegenstand des Patentanspruchs 1, sowie einem Kraftrad mit den Merkmalen des Patentanspruchs 9. Vorteilhafte Ausführungsformen ergeben sich aus den jeweils abhängigen Patentansprüchen.

Demnach wird eine Rückspiegelanordnung für ein Kraftrad bereitgestellt mit einem Spiegelhalter und einem Haltearm, der zum Verbinden des Spiegelhalters mit dem Kraftrad ausgebildet ist, wobei zwischen dem Haltearm und dem Spiegelhalter eine Verstellvorrichtung angeordnet ist, welche zumindest um eine freie Rotationsachse verdrehbar ausgebildet ist, um eine Relativposition des Spiegelhalters gegenüber dem Haltearm mittels einer Drehverstellung (auch als Drehbewegung bezeichnet) zu verstellen. Außerdem umfasst die Verstellvorrichtung eine Begrenzungsvorrichtung zum Beschränken der Drehverstellung.

Die Rückspiegelanordnung umfasst also einen Spiegelhalter, der beispielsweise als Spiegelgehäuse ausgebildet sein kann. Dieses kann zum Beispiel schalenförmig geformt sein und im Bereich einer von der Schalenform gebildeten Kavität ein Spiegelelement (zum Beispiel ein Spiegelglas) aufnehmen. In jedem Fall ist der Spiegelhalter über die Verstellvorrichtung mit einem fahrzeugfernen, ersten Ende des Haltearms verbunden. Ein dem ersten Ende entgegengesetzt angeordnetes fahrzeugnahes, zweites Ende kann mit einer Fahrzeugstruktur des Kraftrads verbindbar ausgebildet sein beziehungsweise (in einem am Kraftrad verbauten Zustand) mit dieser verbunden sein. Die Fahrzeugstruktur kann unter anderem einen Lenker, ein Fahrzeugrahmen und/oder eine Fahrzeugverkleidung beziehungsweise eine Fahrzeugkarosserie umfassen. Die Verbindung des zweiten Endes des Haltearms mit der Fahrzeugstruktur kann starr oder ebenfalls gelenkig sein.

Die Verstellvorrichtung ist dazu ausgebildet die Verstellbarkeit des Spiegelhalters gegenüber dem Haltearm bereitzustellen. Hierzu ist die Verstellvorrichtung zumindest um die freie Rotationsachse verdrehbar. Es versteht sich, dass die Verstellvorrichtung darüber hinaus noch weitere, zusätzliche Freiheitsgrade aufweisen kann.

Außerdem weist die Verstellvorrichtung die Begrenzungsvorrichtung auf, die dazu vorgesehen ist, einen Bewegungsumfang der Drehverstellung um die freie Rotationsachse zu beschränken. Die Begrenzungsvorrichtung ist also dazu ausgebildet, ein Verdrehen des Spiegelhalters gegenüber dem Haltearm über einen definierten Bewegungsumfang hinaus zu begrenzen beziehungsweise zu blockieren. Die Begrenzungsvorrichtung stellt somit einen Verdrehschutz dar, der ein übermäßiges Verdrehen des Spiegelgehäuses gegenüber dem Haltearm verhindert. Dies reduziert einen Verschleiß der beweglichen Teile und Verbindungsstellen, die Reibungseffekten unterworfen sind, so dass eine besonders hohe Langlebigkeit der Verstellvorrichtung auf diese Weise sichergestellt werden kann.

Diese Ausgestaltung der Rückspiegelanordnung ist für elektrifizierte Rückspiegelanordnungen geeignet, die eine oder mehrere elektrische Leitungen aufweisen, die zwischen dem Haltearm und dem Spiegelhalter verlaufen. Die elektrischen Leitungen werden im Inneren des Haltearms von einer Fahrzeugstruktur bis in den Spiegelhalter geführt, wobei die elektrischen Leitungen durch die Verstellvorrichtung hindurch geführt werden. Beispielsweise kann die Rückspiegelanordnung elektrische Komponenten, wie Leuchtelemente, Blinker und/oder Heizelemente, aufweisen, die dem Spiegelgehäuse und/oder dem Spiegelglas zugeordnet sind und über die elektrischen Leitungen mit Strom und/oder elektrischen Signalen versorgt werden.

Die Begrenzungsvorrichtung verhindert wirkungsvoll ein Überdrehen beziehungsweise ein Verdrillen der innenliegenden elektrischen Leitung(en) und damit deren Beschädigung, zum Beispiel durch einen Kabelbruch, oder ein Lösen einer elektrischen Kontaktierung. Somit wird hinsichtlich des Aspekts der elektrischen Verbindung eine besonders hohe Langlebigkeit bereitgestellt.

Als Kraftrad werden im Rahmen dieser Beschreibung unter anderem Motorräder oder motorradähnliche Kraftfahrzeuge, wie Motorroller, insbesondere neigefähige zwei-, drei- oder vierrädrige Motorroller, Scooter oder Dergleichen, sowie Schneemobile oder Quads verstanden.

Gemäß einer bevorzugten Ausführungsform umfasst die Verstellvorrichtung ein Kugelgelenk mit einer Kugelpfanne und einem in der Kugelpfanne geführten Kugelkopf. Das Kugelgelenk bietet die Möglichkeit, den Spiegelhalter in seiner Relativposition zu dem Haltearm leicht zu verstellen, wobei ein Verdrehen um die durch das Kugelgelenk gebildete freie Rotationsachse ermöglicht wird.

Hierzu kann vorzugsweise der Kugelkopf dem Spiegelhalter und die Kugelpfanne dem Haltearm zugeordnet sein. Alternativ ist auch eine umgekehrte Zuordnung möglich.

Des Weiteren kann der Kugelkopf von einer Gehäusewandung des Spiegelhalters gebildet werden. Der Kugelkopf ist somit integraler Bestandteil eines Spiegelgehäuses des Spiegelhalters. Zum Beispiel kann die Gehäusewandung des Spiegelhalters mittels Spritzguss- oder Druckgussverfahren hergestellt und hierbei der Kugelkopf einstückig und/oder materialeinheitlich mit der Gehäusewandung ausgebildet sein/werden.

Gemäß einer Ausführungsform kann die Begrenzungsvorrichtung auf einer von der Kugelpfanne abgewandten Seite der Gehäusewandung des Spiegelhalters angeordnet sein.

Außerdem kann die Begrenzungsvorrichtung ein Sperrelement mit mindestens einem Fortsatz umfassen, welcher zur Beaufschlagung mindestens eines Anschlages der Begrenzungsvorrichtung in mindestens einer Endposition der Drehverstellung vorgesehen ist. Hierbei kann der mindestens eine Anschlag beispielsweise dem Spiegelhalter beziehungsweise dessen Gehäusewandung zugeordnet sein. Dagegen kann das Sperrelement drehfest mit der Kugelpfanne gekoppelt sein, so dass eine Drehbewegung des Spiegelhalters zu einer Verdrehung der Gehäusewandung und damit des einen oder der mehreren Anschläge relativ zu dem Sperrelement führt. Erreicht der mindestens eine Anschlag den entsprechenden Fortsatz des Sperrelements, so wird eine darüber hinausgehende, weitere Drehbewegung in dieser Drehrichtung blockiert. Der mindestens eine Anschlag schränkt also eine Bewegungsfreiheit soweit ein, dass der Spiegelhalter nur noch um einen vorbestimmten Winkel verdreht werden kann. Auf diese Weise wird ein Überdrehen der eventuell im Inneren liegenden elektrischen Leitungen unterbunden.

Selbstverständlich kann analog bei gleicher Wirkungsweise der mindestens eine Anschlag dem Sperrelement und der mindestens eine Fortsatz der Gehäusewandung des Spiegelhalters zugeordnet sein.

Vorzugsweise kann das Sperrelement auf einer ersten Seite der Gehäusewandung und die Kugelpfanne auf einer der ersten Seite entgegengesetzt angeordneten zweiten Seite angeordnet sein. Damit ist die Gehäusewandung zwischen der Kugelpfanne und dem Sperrelement positioniert.

Zur Bereitstellung der drehfesten Anordnung des Sperrelements gegenüber der Kugelpfanne können diese mit einem Verbindungsmittel, beispielsweise mit einer Schraube, oder mittels einer gemeinsamen Anordnung an einem Endabschnitt des Haltearms (im Bereich des ersten Endes) verbunden sein. Hierzu kann sich das Verbindungsmittel oder der Endabschnitt durch eine entsprechend dimensionierte Ausnehmung in dem Kugelkopf hindurch erstrecken. Beim Verstellen des Spiegelhalters kann die Gehäusewandung mit dem Kugelkopf trotzdem gegenüber der Kugelpfanne und dem Sperrelement bewegt werden.

Des Weiteren kann die Verstellvorrichtung ein Federelement zum axialen Vorspannen der Verstellvorrichtung umfassen, wobei das Federelement das Sperrelement mit einer Federkraft in Richtung des Kugelkopfes und der Kugelpfanne vorspannt. Zum Beispiel kann das Federelement derart angeordnet sein, dass die Spannkraft in koaxialer Richtung zu dem Verbindungsmittel, zu dem Endabschnitt des Haltearms und/oder zu der freien Rotationsachse ausgerichtet ist. Zum Beispiel kann das Federelement als Spiralfeder ausgeführt sein und koaxial zu dem Verbindungsmittel, zu dem Endabschnitt und/oder zu der freien Rotationsachse angeordnet sein.

Des Weiteren kann die Verstellvorrichtung (zusätzlich zum Drehverstellen um die freie Rotationsachse) zum Kippen des Spiegelhalters gegenüber dem Haltearm ausgebildet sein.

Wie voranstehend beschrieben, umfasst die Rückspiegelanordnung mindestens eine elektrische Leitung, die sich von dem Haltearm durch die Verstellvorrichtung zu dem Spiegelhalter erstreckt. Hierzu kann der Haltearm entlang seiner Länge einen durchgehenden Hohlraum zur Leitungsführung aufweisen.

Des Weiteren wird ein Kraftrad mit mindestens einer Rückspiegelanordnung bereitgestellt, die mit einer Fahrzeugstruktur des Kraftrades verbunden ist, wobei die Rückspiegelanordnung gemäß der Beschreibung ausgebildet ist. Die Erfindung wird nachfolgend anhand eines Ausführungsbeispiels unter Bezugnahme auf die Zeichnungen näher erläutert. Es zeigen.
- Fig. 1:: eine Rückspiegelanordnung gemäß der Beschreibung,
- Fig. 2:: eine Detailansicht einer Verstellvorrichtung der Rückspiegelanordnung gemäß Fig. 1,
- Fig. 3:: eine Schnittansicht der Verstellvorrichtung gemäß Fig. 2 und
- Fig. 4:: eine perspektivische Teilansicht eines Sperrelements der Verstellvorrichtung gemäß Fig. 3.

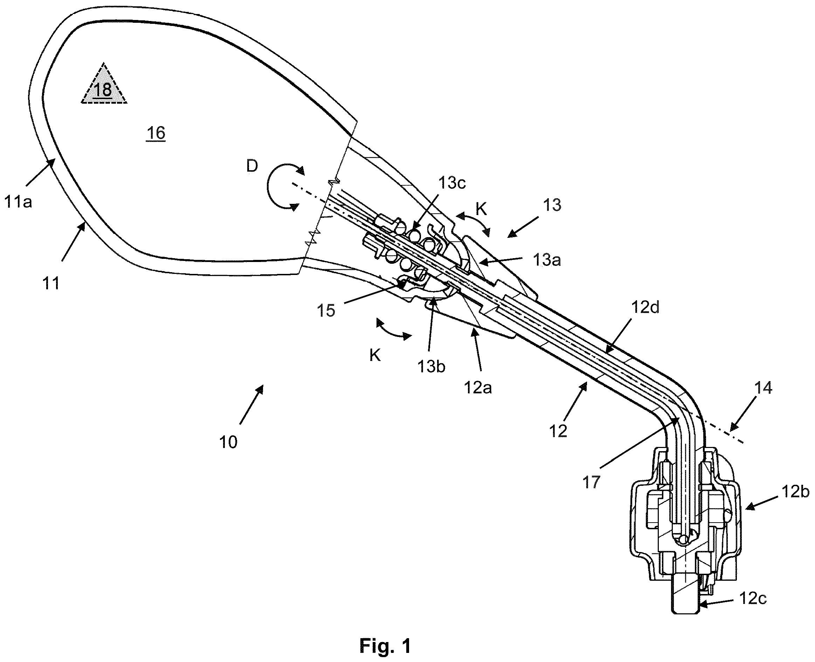

Fig. 1 zeigt eine Rückspiegelanordnung 10 für ein Kraftrad (nicht dargestellt) in einer teilweise geschnittenen Seitenansicht. Die Rückspiegelanordnung 10 umfasst einen Spiegelhalter 11 und einen Haltearm 12, der zum Verbinden des Spiegelhalters 11 mit dem Kraftrad ausgebildet ist, wobei zwischen dem Haltearm 12 und dem Spiegelhalter 11 eine Verstellvorrichtung 13 angeordnet ist, welche zumindest um eine freie Rotationsachse 14 verdrehbar (Drehverstellung D) ausgebildet ist, um eine Relativposition des Spiegelhalters 11 gegenüber dem Haltearm 12 zu verstellen. Außerdem umfasst die Verstellvorrichtung 13 eine Begrenzungsvorrichtung 15 zum Beschränken der Drehverstellung D.

Der Spiegelhalter 11 ist in der dargestellten Ausführungsform als schalenförmiges Spiegelgehäuse ausgebildet. Die Schalenform bildet eine Kavität in der ein Spiegelelement 16 angeordet und von einem umlaufenden Randabschnitt 11a des Spiegelhalters 11 umschlossen wird.

Der Spiegelhalter 11 ist über die Verstellvorrichtung 13 mit einem fahrzeugfernen, ersten Ende 12a des Haltearms 12 verbunden. Ein dem ersten Ende 12a entgegengesetzt angeordnetes fahrzeugnahes, zweites Ende 12b ist mit einer Fahrzeugstruktur (nicht dargestellt) des Kraftrads verbindbar ausgebildet. Die Verbindung des zweiten Endes 12b des Haltearms 12 mit der Fahrzeugstruktur kann starr oder ebenfalls gelenkig sein.

Hierzu umfasst der Haltearm 12 lediglich beispielhaft einen zylinderförmigen Halteabschnitt 12c, der als Bolzen zum Einstecken oder mit einem Gewinde versehen zum Einschrauben in eine entsprechend fahrzeugseitig an der Fahrzeugstruktur vorgesehene Aufnahme (nicht dargestellt) geführt sein kann.

Wie beschrieben stellt die Verstellvorrichtung 13 die Verstellbarkeit des Spiegelhalters 11 gegenüber dem Haltearm 12 bereit. Hierzu ist die Verstellvorrichtung 13 zumindest um die freie Rotationsachse 14 verdrehbar (Drehverstellung D). Es versteht sich, dass die Verstellvorrichtung 13 darüber hinaus noch weitere, zusätzliche Freiheitsgrade aufweisen kann.

Um einen Bewegungsumfang der Drehverstellung D um die freie Rotationsachse 14 zu beschränken, weist die Verstellvorrichtung 13 die genannte Begrenzungsvorrichtung 15 auf. Diese 15 ist dazu ausgebildet, ein Verdrehen des Spiegelhalters 11 gegenüber dem Haltearm 12 über einen definierten Bewegungsumfang hinaus zu begrenzen.

Die dargestellte Rückspiegelanordnung 10 ist als elektrifizierte Rückspiegelanordnung ausgeführt und weist eine elektrische Leitung 17 auf, die innerhalb des Haltearms 12 bis in den Spiegelhalter 11 verläuft. Diese kann beispielsweise zur Versorgung von elektrischen Komponenten 18 (wie einem Leuchtelement und/oder einem Blinker und/oder einem Heizelement) mit Strom und/oder elektrischen Signalen vorgesehen sein, die dem Spiegelhalter 11 und/oder dem Spiegelglas 16 zugeordnet sind. Beispielhaft ist ein Leuchtelement 18 eines Totwinkel-Warnsystems dargestellt. Selbstverständlich können anstelle der einen elektrischen Leitung 17 auch mehrere elektrische Leitungen in gleicher Weise vorgesehen werden. Wie in Fig. 1 dargestellt, verläuft die elektrische Leitung 17 im Inneren durch die Verstellvorrichtung 13 hindurch.

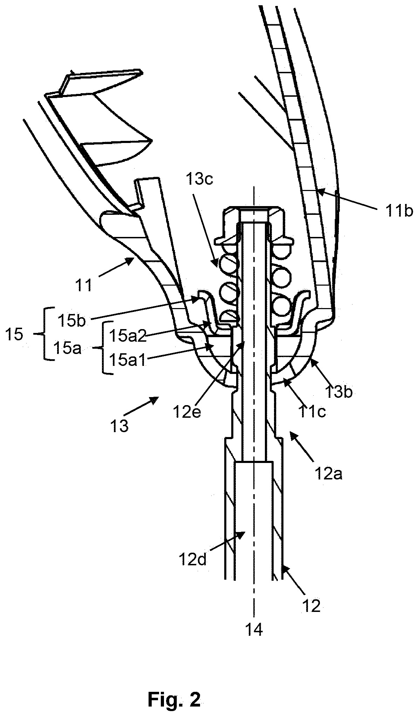

In der Detailansicht der Verstellvorrichtung 13 gemäß Fig. 2 ist die elektrische Leitung 17 der besseren Übersichtlichkeit halber ausgeblendet, so dass eine entsprechende rohrförmige Form des Haltearms 12 mit einem entlang seiner Länge verlaufenden Hohlraums 12d erkennbar ist, der zur Aufnahme der elektrischen Leitung 17 vorgesehen ist.

Die Verstellvorrichtung 13 umfasst in der dargestellten Ausführungsform ein Kugelgelenk mit einer Kugelpfanne 13a und einem in der Kugelpfanne 13a geführten Kugelkopf 13b, wobei der Kugelkopf 13b dem Spiegelhalter 11 und die Kugelpfanne 13a dem Haltearm 12 zugeordnet sind.

Das Kugelgelenk bietet die Möglichkeit, den Spiegelhalter 11 in seiner Relativposition zu dem Haltearm 12 leicht zu verstellen, wobei ein Verdrehen um die durch das Kugelgelenk gebildete freie Rotationsachse 14 ermöglicht wird. Zusätzlich ermöglicht die Ausführung als Kugelgelenk eine (bezüglich der Rotationsachse 14) seitliche Kippbarkeit (Kippbewegung K), so dass der Kugelkopf 13b und damit der Spiegelhalter 11 seitlich gegenüber dem Haltearm 12 gekippt werden kann.

Gemäß der dargestellten Ausführungsform ist der Kugelkopf 13b von der Gehäusewandung 11b des Spiegelhalters 11 gebildet und somit integraler Bestandteil des Spiegelgehäuses des Spiegelhalters 11.

Die Begrenzungsvorrichtung 15 ist auf einer von der Kugelpfanne 13a abgewandten Seite des Kugelkopfes 13b angeordnet, also innerhalb des Kugelkopfes 13b beziehungsweise innerhalb der Gehäusewandung 11b des Spiegelhalters 11.

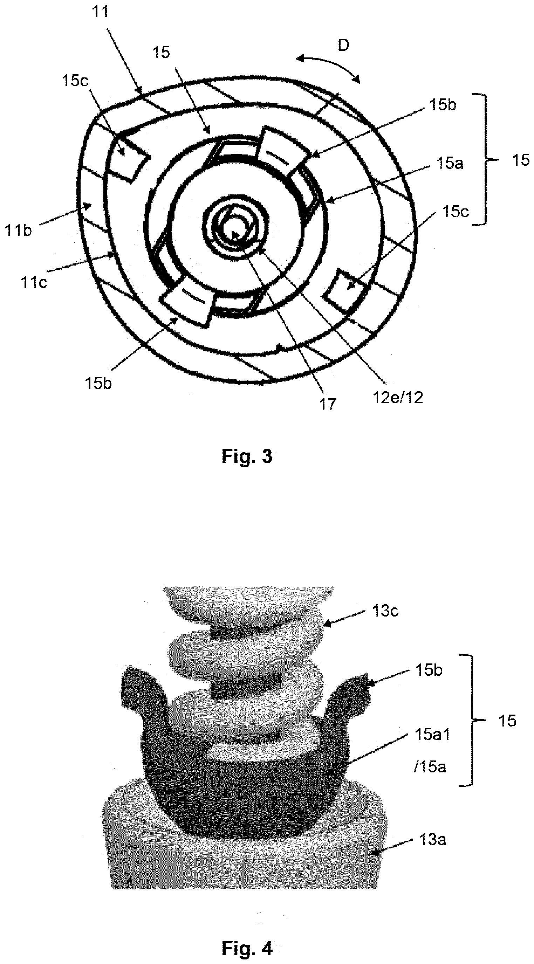

Wie aus den Fig. 2 und 3 ersichtlich ist, weist die Begrenzungsvorrichtung 15 ein Sperrelement 15a mit zwei Fortsätzen 15b auf, die zur Beaufschlagung von zwei Anschlägen 15c der Begrenzungsvorrichtung 15 in zwei definierten Endpositionen der Drehverstellung D vorgesehen ist. Die beiden Anschläge 15c sind in der dargestellten Ausführungsform dem Spiegelhalter 11 zugeordnet und entsprechend auf einer Innenseite 11c der Gehäusewandung 11b angeordnet.

Das Sperrelement 15a ist drehfest mit der Kugelpfanne 13a gekoppelt, so dass eine Drehverstellung D des Spiegelhalters 11 zu einer Verdrehung der Gehäusewandung 11b und damit der beiden Anschläge 15c gegenüber dem Sperrelement 15a führt. Erreichen einer oder beide Anschläge 15c den jeweiligen Fortsatz 15b des Sperrelements 15a, so wird durch diesen 15b eine darüber hinausgehende, weitere Drehverstellung D in dieser Drehrichtung blockiert. Der jeweilige Anschlag 15c schränkt also eine Bewegungsfreiheit soweit ein, dass der Spiegelhalter 11 nur noch um einen vorbestimmten Winkel (hier bis zu ca. 180°) verdreht werden kann. Auf diese Weise wird ein Überdrehen der im Inneren liegenden elektrischen Leitung unterbunden. Es versteht sich, dass anstelle der zwei Anschläge 15c und deren versetzte Anordnung um 180° auch lediglich ein Anschlag oder mehr als zwei Anschläge vorgesehen werden können, und/oder deren (Winkel-)Abstand zueinander nach Bedarf gewählt werden kann. Gleiches gilt für die Anzahl und Position der Fortsätze 15b des Sperrelements 15a. Es kann auch lediglich ein Fortsatz oder mehr als zwei Fortsätze vorgesehen werden, und/oder deren (Winkel-)Abstand zueinander nach Bedarf gewählt werden.

Wie aus Fig. 2 ersichtlich ist das Sperrelement 15a auf einer ersten Seite der Gehäusewandung 11b und die Kugelpfanne 13a auf einer der ersten Seite entgegengesetzt angeordneten zweiten Seite angeordnet, so dass die den Kugelkopf 13b bildende Gehäusewandung 11b zwischen der Kugelpfanne 13a und dem Sperrelement 15a positioniert ist.

Die drehfeste Anordnung des Sperrelements 15a gegenüber der Kugelpfanne 13a wird beispielhaft durch einen Endabschnitt 12e des Haltearms 12 bereitgestellt, der an dem ersten Ende 12a angeordnet ist und sich durch eine entsprechend dimensionierte Ausnehmung 11c des Kugelkopfs 13b hindurch erstreckt, und auf den das Sperrelement 15a drehfest aufgesteckt ist.

Die Ausnehmung 11c ist derart abgestimmt, dass beim Verstellen des Spiegelhalters 11 die Gehäusewandung 11b mit dem Kugelkopf 13b trotzdem gegenüber der Kugelpfanne 13a und dem Sperrelement 15a bewegt werden kann.

Des Weiteren umfasst die Verstellvorrichtung 13 ein als Spiralfeder 13c ausgeführtes Federelement 13c zum axialen Vorspannen der Verstellvorrichtung 13, wobei das Federelement 13c das Sperrelement 15a mit einer Federkraft in Richtung des Kugelkopfes 13b und der Kugelpfanne 13a vorspannt. Die Spannkraft ist hierzu in koaxialer Richtung zu dem Endabschnitt 12e und zu der freien Rotationsachse 14 ausgerichtet.

Wie insbesondere aus Fig. 2 ersichtlich, kann das Sperrelement 15a gemäß einer ersten Ausführungsform zwei Elemente 15a1, 15a2 umfassen: eine Kalotte 15a1, deren Kugeloberfläche auch bei einer Verdrehung und/oder Verkippung des Spiegelhalters 11 flächig an der inneren Oberfläche 11c der Gehäusewandung 11b im Bereich des Kugelkopfes 13b anliegt. Die beiden Fortsätze 15b sind an einem separaten scheibenförmigen Element 15a2 ausgebildet.

Fig. 4 zeigt eine alternative, zweite Ausführungsform des Sperrelements 15a, bei der das Sperrelement 15a einstückig ausgebildet ist. Hierbei sind die beiden Fortsätze 15b einstückig und materialeinheitlich an der Kalotte 15a1 integral ausgebildet. Das Sperrelement 15a kann ohne weiteren Änderungsbedarf in die erste Ausführungsform (gemäß Fig. 1 bis 3) der Rückspiegelanordnung 10 eingesetzt werden und das dortige zweiteilige Sperrelement 15a ersetzen.

## Patentansprüche

1. Rückspiegelanordnung (10) für ein Kraftrad mit einem Spiegelhalter (11) und einem Haltearm (12), der zum Verbinden des Spiegelhalters (11) mit dem Kraftrad ausgebildet ist, wobei zwischen dem Haltearm (12) und dem Spiegelhalter (11) eine Verstellvorrichtung (13) angeordnet ist, welche zumindest um eine freie Rotationsachse (14) verdrehbar ausgebildet ist, um eine Relativposition des Spiegelhalters (11) gegenüber dem Haltearm (12) zu verstellen, wobei die Verstellvorrichtung (13) eine Begrenzungsvorrichtung (15) zum Beschränken der Drehverstellung (D) umfasst, **dadurch gekennzeichnet dass** die Rückspiegelanordnung (10) mindestens eine elektrische Leitung (17) umfasst, die sich von dem Haltearm (12) durch die Verstellvorrichtung (13) zu dem Spiegelhalter (11) erstreckt..

2. Rückspiegelanordnung (10) nach Anspruch 1, **dadurch gekennzeichnet, dass** die Verstellvorrichtung (13) ein Kugelgelenk mit einer Kugelpfanne (13a) und einem in der Kugelpfanne (13a) geführten Kugelkopf (13b) umfasst.

3. Rückspiegelanordnung (10) nach Anspruch 2, **dadurch gekennzeichnet, dass** der Kugelkopf (13b) dem Spiegelhalter (11) und die Kugelpfanne (13a) dem Haltearm (12) zugeordnet ist.

4. Rückspiegelanordnung (10) nach Anspruch 2 oder 3, **dadurch gekennzeichnet, dass** der Kugelkopf (13b) von einer Gehäusewandung (11b) des Spiegelhalters (11) gebildet wird.

5. Rückspiegelanordnung (10) nach einem der Ansprüche 2 bis 4, **dadurch gekennzeichnet, dass** die Begrenzungsvorrichtung (15) auf einer von der Kugelpfanne (13a) abgewandten Seite der Gehäusewandung (11b) angeordnet ist.

6. Rückspiegelanordnung (10) nach einem der Ansprüche 1 bis 5, **dadurch gekennzeichnet, dass** die Begrenzungsvorrichtung (15) ein Sperrelement (15a) mit mindestens einem Fortsatz (15b) umfasst, welcher zur Beaufschlagung mindestens eines Anschlages (15c) der Begrenzungsvorrichtung (15) in jeweils einer Endposition der Drehverstellung (D) vorgesehen ist.

7. Rückspiegelanordnung (10) nach Anspruch 6, **dadurch gekennzeichnet, dass** die Verstellvorrichtung (13) ein Federelement (13c) zum axialen Vorspannen der Verstellvorrichtung (13) umfasst, wobei das Federelement (13c) das Sperrelement (15a) mit einer Federkraft in Richtung des Kugelkopfes (13b) und der Kugelpfanne (13a) beaufschlagt.

8. Rückspiegelanordnung (10) nach einem der Ansprüche 1 bis 7, **dadurch gekennzeichnet, dass** die Verstellvorrichtung (13) zum Kippen (K) des Spiegelhalters (11) gegenüber dem Haltearm (12) ausgebildet ist.

9. Kraftrad mit mindestens einer Rückspiegelanordnung (10), die mit einer Fahrzeugstruktur verbunden ist, **dadurch gekennzeichnet, dass** die Rückspiegelanordnung (10) gemäß einem der Patentansprüche 1 bis 8 ausgebildet ist.

## Claims

1. Rear mirror assembly (10) for a motorcycle, comprising a mirror mounting (11) and a holding arm (12) which is designed to connect the mirror mounting (11) to the motorcycle, an adjustment device (13) being arranged between the holding arm (12) and the mirror mounting (11), the adjustment device being designed to be rotatable at least about one free axis of rotation (14) in order to adjust the position of the mirror mounting (11) relative to the holding arm (12), the adjustment device (13) comprising a limiting device (15) in order to limit the rotational adjustment (D), **characterized in that** the rear mirror assembly (10) comprises at least one electrical line (17) which extends from the holding arm (12) through the adjustment device (13) to the mirror mounting (11).

2. Rear mirror assembly (10) according to Claim 1, **characterized in that** the adjustment device (13) comprises a ball joint having a ball socket (13a) and a ball head (13b) guided in the ball socket (13a).

3. Rear mirror assembly (10) according to Claim 2, **characterized in that** the ball head (13b) is assigned to the mirror mounting (11), and the ball socket (13a) is assigned to the holding arm (12).

4. Rear mirror assembly (10) according to Claim 2 or 3, **characterized in that** the ball head (13b) is formed by a housing wall (11b) of the mirror mounting (11).

5. Rear mirror assembly (10) according to any of Claims 2 to 4, **characterized in that** the limiting device (15) is arranged on a side of the housing wall (11b) facing away from the ball socket (13a).

6. Rear mirror assembly (10) according to any of Claims 1 to 5, **characterized in that** the limiting device (15) comprises a blocking element (15a) having at least one extension (15b) which is provided to act on at least one stop (15c) of the limiting device (15) in each end position of the rotational adjustment (D).

7. Rear mirror assembly (10) according to Claim 6, **characterized in that** the adjustment device (13) comprises a spring element (13c) for axially preloading the adjustment device (13), the spring element (13c) acting on the blocking element (15a) with a spring force towards the ball head (13b) and the ball socket (13a).

8. Rear mirror assembly (10) according to any of Claims 1 to 7, **characterized in that** the adjustment device (13) is designed to tilt (K) the mirror mounting (11) relative to the holding arm (12).

9. Motorcycle comprising at least one rear mirror assembly (10) which is connected to a vehicle structure, **characterized in that** the rear mirror assembly (10) is designed according to any of Patent Claims 1 to 8.

## Revendications

1. Agencement de rétroviseur (10) pour un motocycle avec un support de miroir (11) et un bras de maintien (12) qui est configuré pour relier le support de miroir (11) au motocycle, un dispositif de réglage (13) étant agencé entre le bras de maintien (12) et le support de miroir (11), lequel est configuré de manière à pouvoir tourner au moins autour d'un axe de rotation libre (14), pour régler une position relative du support de miroir (11) par rapport au bras de maintien (12), le dispositif de réglage (13) comprenant un dispositif de limitation (15) pour restreindre le réglage en rotation (D), **caractérisé en ce que** l'agencement de rétroviseur (10) comprend au moins une ligne électrique (17) qui s'étend depuis le bras de maintien (12) à travers le dispositif de réglage (13) jusqu'au support de miroir (11).

2. Agencement de rétroviseur (10) selon la revendication 1, **caractérisé en ce que** le dispositif de réglage (13) comprend une articulation à rotule avec un coussinet sphérique (13a) et une tête sphérique (13b) guidée dans le coussinet sphérique (13a).

3. Agencement de rétroviseur (10) selon la revendication 2, **caractérisé en ce que** la tête sphérique (13b) est associée au support de miroir (11) et le coussinet sphérique (13a) est associé au bras de maintien (12) .

4. Agencement de rétroviseur (10) selon la revendication 2 ou 3, **caractérisé en ce que** la tête sphérique (13b) est formée par une paroi de boîtier (11b) du support de miroir (11).

5. Agencement de rétroviseur (10) selon l'une quelconque des revendications 2 à 4, **caractérisé en ce que** le dispositif de limitation (15) est agencé sur un côté de la paroi de boîtier (11b) qui est détourné du coussinet sphérique (13a).

6. Agencement de rétroviseur (10) selon l'une quelconque des revendications 1 à 5, **caractérisé en ce que** le dispositif de limitation (15) comprend un élément de blocage (15a) avec au moins un prolongement (15b) qui est prévu pour solliciter au moins une butée (15c) du dispositif de limitation (15) dans respectivement une position finale du réglage en rotation (D).

7. Agencement de rétroviseur (10) selon la revendication 6, **caractérisé en ce que** le dispositif de réglage (13) comprend un élément à ressort (13c) pour la précontrainte axiale du dispositif de réglage (13), l'élément à ressort (13c) sollicitant l'élément de blocage (15a) avec une force de ressort en direction de la tête sphérique (13b) et du coussinet sphérique (13a).

8. Agencement de rétroviseur (10) selon l'une quelconque des revendications 1 à 7, **caractérisé en ce que** le dispositif de réglage (13) est configuré pour faire basculer (K) le support de miroir (11) par rapport au bras de maintien (12).

9. Motocycle avec au moins un agencement de rétroviseur (10), qui est relié à une structure de véhicule, **caractérisé en ce que** l'agencement de rétroviseur (10) est configuré selon l'une quelconque des revendications 1 à 8.
